# EUROPEAN PATENT APPLICATION

(11) **EP 4 672 693 A1**
(43) Date of publication of application: **31.12.2025**
(21) Application number: 24185469.4
(22) Date of filing: 28.06.2024
(51) Int. Cl.: H04L 41/0677, H04L 41/147, H04L 41/16, H04L 41/5009

(54) **HIERARCHICAL FAULT PREDICTOR**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A method comprising: (a) obtaining a hierarchy of two or more devices in a network, wherein the hierarchy describes connectivity of the two or more devices and/or describes relationship between the two or more devices; (b) obtaining a first detector's output of each of the two or more devices at a time of installation; (c) obtaining a second detector's output of an external element of the two of more devices at the time of installation; (d) obtaining performance measurement(s) of each of the two or more devices at the time of installation; (e) obtaining environmental information of each of the two or more devices at the time and/or a location of installation; (f) obtaining historical fault data associated with the network, device(s) and/or environment; (g) obtaining network performance metrics associated with the network; (h) inputting, to a machine learning model, at least some of the data, metrics and/or information, obtained in steps (a)-(g); (i) outputting, from the machine learning model, a faulty installation likelihood predictor configured to apply an overall confidence level to the installed equipment; (j) if the overall confidence level is below a predetermined threshold, recommending a corrective action until the overall confidence level is above a second predetermined threshold.

## Description

### TECHNICAL FIELD

Aspects of the present disclosure relate to installation of equipment. More specifically, aspects relate to identification of potential issues arising from the installation of equipment.

### BACKGROUND

The installation of physical equipment by installation operatives such as engineers, service personnel and installers are susceptible to inconsistencies of approach, procedure and/or inconsistent application of quality assurance measures or checks. Consequently, equipment can be installed with varying degrees of correctness ranging from entirely correct to entirely incorrect with a continuous spectrum of measures of correctness therebetween, any of which may be objectively defined or measured according to a scale, rating or other scheme for measuring or verifying correctness of installation. In particular, while installation procedures may have been substantially followed correctly by an operative, particular characteristics of the installation process, the installed equipment itself as handled or treated by an operative, other equipment or resources associated with the equipment or an environment of installation of the equipment may render the installed equipment susceptible to a subsequently curtailed lifespan, a curtailed or reduced efficacy or performance, a susceptibility to progressive or sudden degradation in utility, suitability or performance, or other such detriments. Notably, such detriments may not be readily identified as the equipment can be seen to be immediately operable on installation, especially where such detriments relate to a failure to achieve a potential performance or a progressive decline in performance of efficacy over time.

Such equipment installation is common in utilities industries, such as industries that have transmission and distribution networks for the transport, provision, communication or conveyance of a utility such as power (including electricity), gas (including natural gas), liquid (including water), sewage and communications facilities (including fixed-line, wireless and/or mobile telephony and network connections such as broadband services). Such networks are comprised of network infrastructure including means and mechanisms for the transmission of the utility. Such infrastructure can include equipment that is deployed as part of the provision of the utility, including equipment deployed at utility provider premises, business or consumer premises, and at locations therebetween.

For example, the telecommunications industry provides network communications services to businesses and consumers including services such as fibre optic network connections, the provision of which involves the installation of equipment. Incorrect installation of such equipment can lead to the potential early failure, shortened life, reduced performance or other detrimental effects. Therefore, operatives audit an installation to ascertain the degree of correctness of the equipment installation. In telecommunications installations, a considerable proportion of all equipment installation audits reveal a critical error in the installation. A critical error means that there is a need for revisit or repair by the installation operative. For telecommunication installations, such as installation of a customer splice point at which fibre optic cables can be spliced for provision of fibre optic services to a customer's premises, the number of installations outnumbers the number of auditor operatives so critical errors will not be addressed.

Accordingly, there is a challenge to address inconsistent installation of equipment to ensure suitably performing equipment on installation.

The examples described herein are not limited to examples which solve problems mentioned in this background section.

### SUMMARY

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to a first aspect there is a computer-implemented method for predicting quality of device installation in a network of devices, the method comprising: (a) obtaining a hierarchy of two or more devices in a network, wherein the hierarchy describes connectivity of the two or more devices and/or describes relationship between the two or more devices; (b) obtaining a first detector's output of each of the two or more devices at a time of installation; (c)
obtaining a second detector's output of an external element of the two of more devices at the time of installation; (d) obtaining performance measurement(s) of each of the two or more devices at the time of installation; (e) obtaining environmental information of each of the two or more devices at the time and/or a location of installation; (f) obtaining historical fault data associated with the network, device(s) and/or environment; (g) obtaining network performance metrics associated with the network; (h) inputting, to a machine learning model, at least some of the data, metrics and/or information, obtained in steps (a)-(g); (i) outputting, from the machine learning model, a faulty installation likelihood predictor configured to apply an overall confidence level to the installed equipment; (j) if the overall confidence level is below a predetermined threshold, recommending a corrective action until the overall confidence level is above a second predetermined threshold..

In some examples of the computer-implemented method, wherein first and second predetermined thresholds are the same..

In some examples of the computer-implemented method, wherein the first and/or second detector utilises a machine learning model.

In some examples of the computer-implemented method, wherein the at least one detector is a pixel-based detector.

In some examples of the computer-implemented method, wherein the first and second detector are the same. In some examples of the computer-implemented method, obtaining a first detector's output of each of the two or more devices at a time of installation comprises: (i) applying the detector to detect at least one of a 2-dimensional image and/or a 3-dimensional model of equipment that is or is to be installed; (ii) transforming the at least one 2-dimensional image and/or 3-dimensional model of equipment into an equipment elementary object(s); (iii) identifying at least one equipment feature of the equipment elementary object(s); (iv) obtaining a first confidence level associated with the at least one equipment feature; (v) obtaining locational information associated with the at least one equipment feature.

In some examples of the computer-implemented method, wherein obtaining a second detector's output of an external element of the two of more devices at the time of installation comprises: (i) applying at least one detector to detect at least one of a 2-dimensional image and/or a 3-dimensional model of the at least one external element; (ii) transforming the at least one 2-dimensional image and/or 3-dimensional model of the at least one external element into external elementary object(s); (iii) identifying at least one external feature of the external elementary object(s); (iv) obtaining a second confidence level associated with the at least one external feature; (v) obtaining locational information associated with the at least one external feature.

In some examples of the computer-implemented method, wherein the performance metrics comprise service packet loss or delay.

According to a second aspect, there is a computer system including a processor and memory storing computer program code for performing the steps of: (a) obtaining a hierarchy of two or more devices in a network, wherein the hierarchy describes connectivity of the two or more devices and/or describes relationship between the two or more devices; (b) obtaining a first detector's output of each of the two or more devices at a time of installation; (c)
obtaining a second detector's output of an external element of the two of more devices at the time of installation; (d) obtaining performance measurement(s) of each of the two or more devices at the time of installation; (e) obtaining environmental information of each of the two or more devices at the time and/or a location of installation; (f) obtaining historical fault data associated with the network, device(s) and/or environment; (g) obtaining network performance metrics associated with the network; (h) inputting, to a machine learning model, at least some of the data, metrics and/or information, obtained in steps (a)-(g); (i) outputting, from the machine learning model, a faulty installation likelihood predictor configured to apply an overall confidence level to the installed equipment; (j) if the overall confidence level is below a predetermined threshold, recommending a corrective action until the overall confidence level is above a second predetermined threshold.

In some examples of the computer system, wherein first and second predetermined thresholds are the same.

In some examples of the computer system, wherein the first and/or second detector utilises a machine learning model.

In some examples of the computer system, wherein the at least one detector is a pixel-based detector.

In some examples of the computer system, wherein the first and second detector are the same.

In some examples of the computer system, obtaining a first detector's output of each of the two or more devices at a time of installation comprises: (i) applying the detector to detect at least one of a 2-dimensional image and/or a 3-dimensional model of equipment that is or is to be installed; (ii) transforming the at least one 2-dimensional image and/or 3-dimensional model of equipment into an equipment elementary object(s); (iii) identifying at least one equipment feature of the equipment elementary object(s); (iv) obtaining a first confidence level associated with the at least one equipment feature; (v) obtaining locational information associated with the at least one equipment feature.

In some examples of the computer system, wherein obtaining a second detector's output of an external element of the two of more devices at the time of installation comprises: (i) applying at least one detector to detect at least one of a 2-dimensional image and/or a 3-dimensional model of the at least one external element; (ii) transforming the at least one 2-dimensional image and/or 3-dimensional model of the at least one external element into external elementary object(s); (iii) identifying at least one external feature of the external elementary object(s); (iv) obtaining a second confidence level associated with the at least one external feature; (v) obtaining locational information associated with the at least one external feature.

In some examples of the computer system, wherein the performance metrics comprise service packet loss or delay.

According to a third aspect, there is a computer program element comprising computer program code to, when loaded into a computer system and executed thereon, cause the computer to perform the steps: (a)
obtaining a hierarchy of two or more devices in a network, wherein the hierarchy describes connectivity of the two or more devices and/or describes relationship between the two or more devices; (b) obtaining a first detector's output of each of the two or more devices at a time of installation; (c)
obtaining a second detector's output of an external element of the two of more devices at the time of installation; (d) obtaining performance measurement(s) of each of the two or more devices at the time of installation; (e) obtaining environmental information of each of the two or more devices at the time and/or a location of installation; (f) obtaining historical fault data associated with the network, device(s) and/or environment; (g) obtaining network performance metrics associated with the network; (h) inputting, to a machine learning model, at least some of the data, metrics and/or information, obtained in steps (a)-(g); (i) outputting, from the machine learning model, a faulty installation likelihood predictor configured to apply an overall confidence level to the installed equipment; (j) if the overall confidence level is below a predetermined threshold, recommending a corrective action until the overall confidence level is above a second predetermined threshold.

In some examples of the computer program element, wherein first and second predetermined thresholds are the same.

In some examples of the computer program element, wherein the first and/or second detector utilises a machine learning model.

In some examples of the computer program element, wherein the at least one detector is a pixel-based detector.

In some examples of the computer program element, wherein the first and second detector are the same.

In some examples of the computer program element, obtaining a first detector's output of each of the two or more devices at a time of installation comprises: (i) applying the detector to detect at least one of a 2-dimensional image and/or a 3-dimensional model of equipment that is or is to be installed; (ii) transforming the at least one 2-dimensional image and/or 3-dimensional model of equipment into an equipment elementary object(s); (iii) identifying at least one equipment feature of the equipment elementary object(s); (iv) obtaining a first confidence level associated with the at least one equipment feature; (v) obtaining locational information associated with the at least one equipment feature.

In some examples of the computer program element, wherein obtaining a second detector's output of an external element of the two of more devices at the time of installation comprises: (i) applying at least one detector to detect at least one of a 2-dimensional image and/or a 3-dimensional model of the at least one external element; (ii) transforming the at least one 2-dimensional image and/or 3-dimensional model of the at least one external element into external elementary object(s); (iii) identifying at least one external feature of the external elementary object(s); (iv) obtaining a second confidence level associated with the at least one external feature; (v) obtaining locational information associated with the at least one external feature.

In some examples of the computer program element, wherein the performance metrics comprise service packet loss or delay.

### BRIEF DESCRIPTION OF THE DRAWINGS

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.
Figure 1 is a block diagram a computer system suitable for the operation of embodiments of the present invention;
Figure 2 is a flowchart of an exemplary method in accordance with an exemplary arrangement of the present invention;
Figure 3 is a component diagram of an automated equipment installation verification system to automatically verify correctness of installation actions of an operative installing an item of equipment in accordance with an exemplary arrangement of the present invention; and
Figure 4 is a component diagram of an automated equipment installation verification system to automatically verify correctness of installation actions of an operative installing an item of equipment in accordance with an exemplary arrangement of the present invention.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

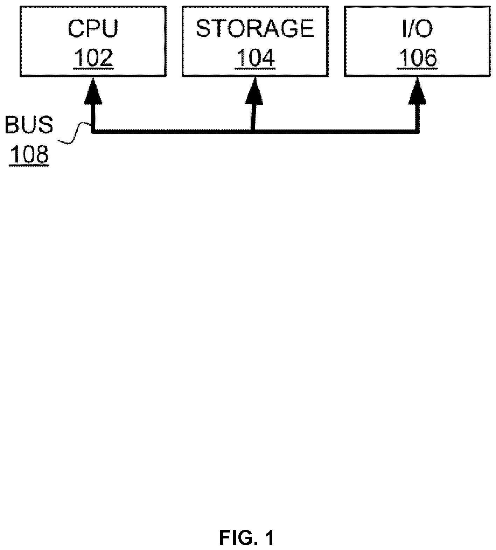

Figure 1 is a block diagram of a computer system suitable for the operation of embodiments of the present invention. In particular logic units as herein described may be implemented as physical or virtual generalised computer systems or dedicated or bespoke processing systems, such as systems configured to execute program code whether software or hardware-encoded such as via stored instructions, firmware or a combination thereof. A central processor unit (CPU) 102 is communicatively connected to a storage 104 and an input/output (I/O) interface 106 via a data bus 108. The storage 104 can be any read/write storage device such as a random-access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

The present invention proposes a mechanism for real-time auditing, for example through a function approximator, e.g. an artificial intelligence (AI) based system, of equipment installation, in particular, telecommunications equipment installation. If an audit can be conducted within a short period of installing the equipment (i.e. with a field engineer still nearby), then it is possible to advise the field engineer on how to rectify any defects immediately and avoid the costs associated with a revisit to the installation site at a later date.

The function approximator of the present invention, in some examples, relies on supervised-learning detectors of the features being audited. e effectiveness of supervised learning relies on the availability of labelled training datasets which correctly identify the audited features.

The following is an exemplary approach of the present invention that can be used for predicting the quality of equipment installation:
Stage 1: Obtain network hierarchy. In some examples, a hierarchy of the network which describes the connectivity of devices in the network, i.e. whether a first device is connected to a second device. Alternatively, or additionally, the hierarchy of the network describes a relationship between two or more devices, in some examples, the relationship is measured by a distance between the two or more devices. In some examples, a network hierarchy includes a device a customer premises atop the hierarchy followed by a distribution point, a cabinet and, finally, an exchange.
Stage 2: Obtain device detector's output at time of installation. In some examples there are three steps in stage 1, including (i) inputting 2D images/videos or 3D models of equipment are transformed into elementary objects such as video frames or images, (ii) searching, using one or more detectors (e.g. pixel-based or machine learning based), for individual features in a region of an elementary object (e.g. a machine learning model can be dedicated to detecting a screw in a given region of an object), and (iii) outputting, by the one or more detectors, a detection confidence and location of the element in a given region (e.g. via a bounding box) of the elementary object.
Stage 3: Obtain device external elements detector's output at time of installation. In some examples, inputting 2D images/videos or 3D models of external elements that are transformed into elementary objects. For example, these elements may be (i) an image of a spliced fibre after a splicing operation - since a misaligned fibre may generate a fault; (ii) an image of an area surrounding the device (e.g. to detect damage to wall) which may later impact the quality of the installation. One or more detectors (e.g. machine learning, pixel-based detectors) can be applied to images and search for individual features in external elements to detect defect and damage. Each detector outputs a detection confidence and location of the feature detected (e.g. via a bounding box)
Stage 4: Obtain device's performance measurements at time of installation. In some examples, this stage can be performed by obtaining device measurements at the time of installation and/or provision, such as, for example, texts on provision data, line rate, line loss.
Stage 5: Obtain environment data for each device in the network at time and/or location of installation. This stage can be performed by (i) obtaining weather environment data such as temperature, rain, humidity, etc, (ii) obtaining record of nearby known hazards (e.g. proximity to other utilities networks such as gas, trees, water, etc).
Stage 6: Obtain historical faults data along a route of the network. This stage is performed by obtaining historical fault data of the device and associated service, e.g. by using data from previous installations of the same and/or similar equipment. In some examples, fault data along the network route is obtained, i.e. faults at all devices in the network and their connecting components such as network links connecting devices in the route.
Stage 7: Obtain network route performance. This stage is performed by obtaining recent or real-time network or service performance metrics along the network route, e.g. service packet loss or delay.
Stage 8: Installation quality model. In this stage, a model, such as a machine learning model receives the data obtained in stages 1-5 as an input, and outputs a faulty installation likelihood predictor.
Stage 9: Installation quality predictor model. In this stage, the faulty installation likelihood predictor is applied to predict a likelihood of individual faults, e.g. ranked by confidence levels and optionally a combination of such confidence levels to given confidence of quality of overall installation.
Stage 10: Corrective action recommendations. In this stage, a rule-based policy is employed that, depending on the faulty installation likelihood predictor in stage 9, prescribes corrective actions to the predicted fault at stage 9, e.g. splicing the fibre likely faulty with confidence 80% could recommend to re-splice the fibre).

The benefits of the approach of the present invention are that by having multiple factors feed into a model (e.g. machine learning model), one can achieve a higher level of interpretability in the installation process. It is possible to trace the result to the installation elements and the element in the hierarchy that may cause potential issues, hence enabling targeted predictive remedial actions.

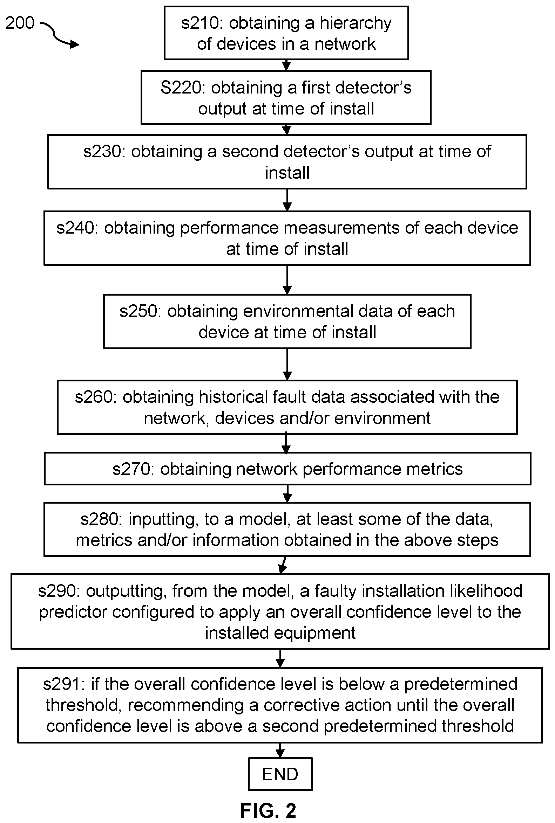

Figure 2 is a flow diagram of an exemplary method 200 of predicting quality of equipment installation.

Starting at step 210, a hierarchy of devices in a network is obtained. In some examples, a hierarchy of the network which describes the connectivity of devices in the network, i.e. whether a first device is connected to a second device. Alternatively, or additionally, the hierarchy of the network describes a relationship between two or more devices, in some examples, the relationship is measured by a distance between the two or more devices. In some examples, a network hierarchy includes a device a customer premises atop the hierarchy followed by a distribution point, a cabinet and, finally, an exchange.

In step 220, a first detector's output is obtained at time of install. In some examples, this can be done performed by (i) applying the detector to detect at least one of a 2-dimensional image and/or a 3-dimensional model of equipment that is or is to be installed; (ii) transforming the at least one 2-dimensional image and/or 3-dimensional model of equipment into an equipment elementary object(s); (iii) identifying at least one equipment feature of the equipment elementary object(s); (iv) obtaining a first confidence level associated with the at least one equipment feature; and (v)
obtaining locational information associated with the at least one equipment feature.

In step 230, a second detector is applied to at least one external element. In some examples, this step is performed by (i) applying at least one detector to detect at least one of a 2-dimensional image and/or a 3-dimensional model of the at least one external element; (ii) transforming the at least one 2-dimensional image and/or 3-dimensional model of the at least one external element into external elementary object(s); (iii) identifying at least one external feature of the external elementary object(s); (iv) obtaining a second confidence level associated with the at least one external feature; (v)
obtaining locational information associated with the at least one external feature.

In step 240, a performance measurement associated with the equipment at time of installation is obtained.

In step 250, data associated with the environment in which the equipment is being installed is obtained.

In step 260, historical fault data associated with the equipment and/or environment is obtained.

In step 270, network performance metrics are obtained.

In step 280, at least some of the data and/or information is inputted to a model, e.g. a machine learning model.

In step 290, a faulty installation likelihood predictor configured to apply an overall confidence level to the installed equipment is output from the model.

In step 291, if the overall confidence level is below a predetermined threshold, a corrective action until the overall confidence level is above a second predetermined threshold is recommended.

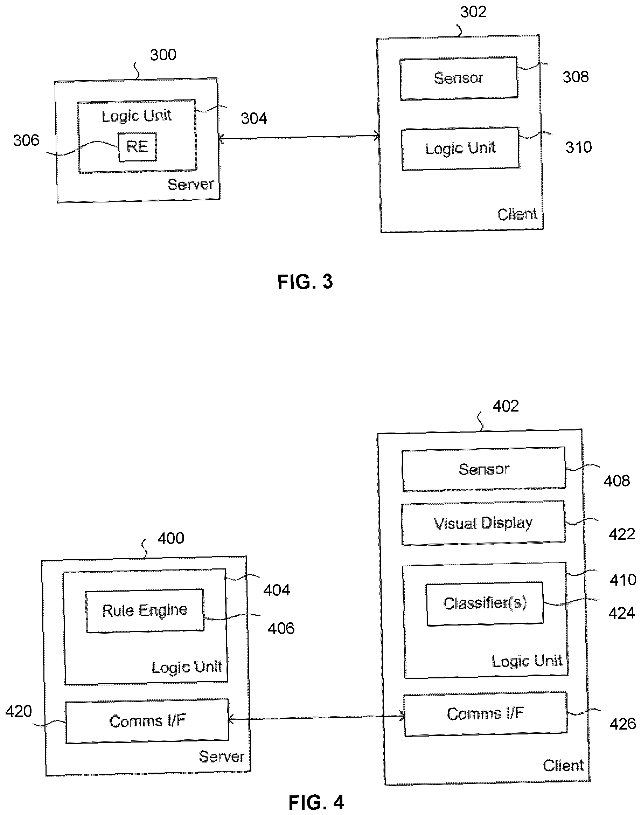

Figure 3 is a component diagram of an automated equipment installation verification system to automatically verify correctness of installation actions of an operative installing an item of equipment in accordance with an exemplary arrangement of the present invention. The system is depicted as a client/server system having a server device 300 and a client device 302. It will be appreciated that such a separation of the system into multiple devices is purely exemplary and a singular or multiplicity of devices may be used.

The client device 302 includes or is constituted by a logic unit 310 such as a general purpose or dedicated computing or processing device. The client device 302 further includes, or has associated, at least one sensor 308 for sensing physical acts performed by an operative installing equipment. The sensor 308 thus generates data corresponding to each act a sequence of acts performed by the operative, such as by way of a sensor as described above. The logic unit 310 of the client device executes at least one classifier trained to determine a degree of correctness of an act of the operative based on the data corresponding to the act provided by the sensor 308. In one arrangement, the logic unit 310 is further operable communicate an output of the classifier to a rule engine 306 of a server device 300.

The server device 300 includes or is constituted by a logic unit 304 such as a general purpose or dedicated computing or processing device that executes a rule engine 306. The rule engine 306 can be provided as a series of program code or firmware, or can be provided as a dedicated hardware rule engine for the provision and execution of rules. The rule engine 306 applies at least one rule to an output of the at least one classifier for each of a sequence actions of the operative in the installation of the equipment, as previously described, to generate an indication of a degree of correctness of the actions performed by the operative.

While the logic unit 304 of the server device and the logic unit 310 of the client device are depicted as separate, it will be appreciated by those skilled in the art that such separation is optional and the logic units can be combined into a composite logic unit. Further, the client 302 and server 300 devices can be communicatively connected such as via a communications interface such as a wired, wireless, bus or other suitable interface.

Figure 4 is a component diagram of an automated equipment installation verification system to automatically verify correctness of installation actions of an operative installing an item of equipment in accordance with an exemplary arrangement of the present invention. The arrangement of Figure 4 shares many features in common with the arrangement of Figure 3 and these will not be repeated here. The exemplary arrangement of Figure 4 shows a client 402 that may be provided to an installation operative performing an installation of equipment at a remote location of the installation, and a server 400 provided at a different location such as a data centre or office or the like. The client 402 and server 400 include communications interfaces 426 and 420 respectively to provide a communicative connection therebetween such as via a cellular data network and/or wired or wireless network. Via the arrangement of Figure 4, the client further includes a visual display 422 such as a screen, indicator or other visual means, for providing the operative with information arising from the automated equipment installation verification system, such as indications of conformity of one or more installation actions and/or particular installation actions having degree of conformity that does not meet a threshold degree of correctness. A sensor 408 is depicted as part of the client device 402 though it will be appreciated that the sensor 408, such as a camera, LiDAR sensor, sound sensor or the like, may be provided as a separate device or component of a device such that data generated by the sensor 408 corresponding to an act of the operative is communicable to the client device 402 for processing by its logic unit 410, or communicable to the server device 400 for processing by its logic unit 404. In one example, the client device 402 is a portable computing device such as a smartphone, tablet, laptop computer or the like. Thus, in use, the sensor 408 generates data characterising each of a set of acts of the operative in the installation of the equipment. The client device executes the classifier 424 to classify the data to determine a degree of correctness of an act of the operative in the sequence of stepwise actions. The classifier output for each of a sequence of acts of the operative is processed by a rule engine 406 of the server device 400 to apply at least one rule to generate an indication of a degree of correctness of the sequence of acts. The degree of correctness of the sequence of acts of the operative, and in some arrangements, one or more individual acts of the operative, is communicated to the client device 402 in order that it may be displayed on the visual display 422 to inform the operative.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions. Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description, it will be evident to a person skilled in the art that various modifications may be made within the scope of the invention.

The preceding description is presented to enable any person skilled in the art to make and use the system and/or perform the method of the invention and is provided in the context of a particular application. Various modifications to the disclosed examples will be readily apparent to those skilled in the art. It is intended that the specification be considered as exemplary only.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

## Claims

1. A computer-implemented method for predicting quality of device installation in a network of devices, the method comprising:
(a) obtaining a hierarchy of two or more devices in a network, wherein the hierarchy describes connectivity of the two or more devices and/or describes relationship between the two or more devices;
(b) obtaining a first detector's output of each of the two or more devices at a time of installation;
(c) obtaining a second detector's output of an external element of the two of more devices at the time of installation;
(d) obtaining performance measurement(s) of each of the two or more devices at the time of installation;
(e) obtaining environmental information of each of the two or more devices at the time and/or a location of installation;
(f) obtaining historical fault data associated with the network, device(s) and/or environment;
(g) obtaining network performance metrics associated with the network;
(h) inputting, to a machine learning model, at least some of the data, metrics and/or information, obtained in steps (a)-(g);
(i) outputting, from the machine learning model, a faulty installation likelihood predictor configured to apply an overall confidence level to the installed equipment;
(j) if the overall confidence level is below a predetermined threshold, recommending a corrective action until the overall confidence level is above a second predetermined threshold.

2. The computer-implemented method of claim 1, wherein first and second predetermined thresholds are the same.

3. The computer-implemented method of claims 1 or 2, wherein the first and/or second detector utilises a machine learning model.

4. The computer-implemented method of any preceding claim, wherein the at least one detector is a pixel-based detector.

5. The computer-implemented method of either of any preceding claim, wherein the first and second detector are the same.

6. The computer-implemented method of any preceding claim, obtaining a first detector's output of each of the two or more devices at a time of installation comprises:
(i) applying the detector to detect at least one of a 2-dimensional image and/or a 3-dimensional model of equipment that is or is to be installed;
(ii) transforming the at least one 2-dimensional image and/or 3-dimensional model of equipment into an equipment elementary object(s);
(iii) identifying at least one equipment feature of the equipment elementary object(s);
(iv) obtaining a first confidence level associated with the at least one equipment feature;
(v) obtaining locational information associated with the at least one equipment feature;

7. The computer-implemented method of any preceding claim, wherein obtaining a second detector's output of an external element of the two of more devices at the time of installation comprises:
(i) applying at least one detector to detect at least one of a 2-dimensional image and/or a 3-dimensional model of the at least one external element;
(ii) transforming the at least one 2-dimensional image and/or 3-dimensional model of the at least one external element into external elementary object(s);
(iii) identifying at least one external feature of the external elementary object(s);
(iv) obtaining a second confidence level associated with the at least one external feature;
(v) obtaining locational information associated with the at least one external feature.

8. The computer-implemented method of any preceding claim, wherein the performance metrics comprise service packet loss or delay.

9. A computer system including a processor and memory storing computer program code for performing the steps of any preceding claim.

10. A computer program element comprising computer program code to, when loaded into a computer system and executed thereon, cause the computer to perform the steps of a method as claimed in any of claims 1 to 8.
